# EUROPÄISCHE PATENTSCHRIFT

(11) **EP 0 765 827 B1**
(45) Veröffentlichungstag und Bekanntmachung des Hinweises auf die Patenterteilung: **02.06.1999**
(21) Anmeldenummer: 95115457.4
(22) Anmeldetag: 29.09.1995
(51) Int. Cl.: B65G 47/91, B65G 61/00, B65G 59/04

(54) **Beschick- oder Stapelvorrichtung für plattenförmige Werkstücke**
Feeding and stacking device for plate-shaped pieces
Dispositif d'alimentation et de stockage d'objets en forme de plaques

(43) Veröffentlichungstag der Anmeldung: 02.04.1997
(73) Patentinhaber: LIGMATECH MASCHINENBAU GmbH, D-09638 Lichtenberg (DE)
(72) Erfinder: Tönnigs, Bodo, Dipl.-Ing., 09638Lichtenberg (DE); Kaden, Dietmar Dipl.-Ing., 09619 Mulda (DE)
(74) Vertreter: Kohlmann, Karl Friedrich, Dipl.-Ing.

(56) Entgegenhaltungen:
- EP-A- 0 467 453
- DE-A- 2 602 622
- DE-A- 4 300 565
- FR-A- 2 337 093
- GB-A- 2 000 739

## Beschreibung

Die Erfindung betrifft eine Beschick- oder Stapelvorrichtung für plattenförmige Werkstücke.

Beschick- oder Stapelvorrichtungen sind in den verschiedensten Ausführungsformen seit langem bekannt und werden insbesondere in Zusammenwirkung mit Durchlaufbearbeitungsmaschinen oder Bearbeitungszentren, z.B. für die Durchführung vielfältiger Bearbeitungsschritte an plattenförmigen Holzwerkstücken, Preßspanwerkstücken, Kunststoffwerkstücken etc. eingesetzt.

Eine Vorrichtung zur Handhabung plattenförmiger Werkstücke ist beispielsweise in der europäischen Offenlegungsschrift EP-A-0 512 126 beschrieben. Diese Vorrichtung stützt sich über eine vertikal verlaufende Tragsäule ab, die entlang einer horizontalen Achsenrichtung verfahrbar ist. Über einen an der Tragsäule in Vertikalrichtung verfahrbaren Schlitten schließt sich an die Tragsäule ein horizontal auskragender Tragarm an, der in seiner Längsachsenrichtung teleskopartig ausfahrbar ist. Am freien Ende dieses Teleskopauslegers ist ein zweiter, sich ebenfalls horizontal erstreckender Tragarm in Querrichtung zum Teleskopausleger angeordnet. Dieser zweite Tragarm ist selbst in Längsachsenrichtung relativ zum Teleskopausleger verfahrbar und zudem trägt er einen Schlitten, der in Längsachsenrichtung relativ zum Tragarm verfahrbar ist. Dieser Schlitten wiederum trägt eine Saugereinheit mit mehreren Vakuumsaugern. Diese Saugereinheit zur Aufnahme plattenförmiger Werkstücke ist relativ zum Schlitten um eine Vertikalachse drehbar.

Mit der Vorrichtung, wie sie in der EP-A-0 512 126 beschrieben ist, können beispielsweise in einem Stapel angelieferte plattenförmige Werkstücke nacheinander vom Stapel abgehoben und beispielsweise auf ein Einlaufband für eine Durchlaufbearbeitungsmaschine aufgelegt werden. Mit ihrer Vielzahl von Verfahr- und Schwenkfunktionen und den zugehörigen Armen, Schlitten, Antrieben und Führungen ist diese bekannte Vorrichtung zur Handhabung plattenförmiger Werkstücke allerdings vergleichsweise aufwendig gestaltet und nimmt vergleichsweise viel Raum in Anspruch. Zudem ist oft keine ausreichende Zugänglichkeit des Beschickungsbereichs für eine Durchlaufbearbeitungsmaschine oder ein Bearbeitungszentrum gegeben, falls aus irgendwelchen Gründen eine manuelle Beschickung anstelle der automatischen Beschickung erforderlich wird.

Aus der deutschen Offenlegungsschrift DE 43 00 565 ist eine Vorrichtung zum grubenlosen Beschicken bzw. Stapeln von plattenförmigen Werkstücken bekannt. Über ein Förderband werden Werkstücke an- oder abtransportiert, die über eine Hubeinrichtung und eine Übergabeeinrichtung von einer einen Stapel mit Werkstücken tragender Hebebühne oder zu dieser Hebebühne transportiert werden. Das Förderband, die Hubeinrichtung, die Übergabeeinrichtung und die Hebebühne sind dabei starr in einem Rahmen angeordnet. Daher ist es nicht möglich, den Arbeitsraum durch Verschwenken eines Teils der Vorrichtung für eine Bedienperson zugänglich zu machen. Die Vorrichtung gemäß der DE 43 00 565 kann bauartbedingt Werkstücke nicht in einer Grube stapeln, was beispielsweise bei nach oben begrenztem Bauraum von Vorteil wäre.

Aus der europäischen Offenlegungsschrift EP 0 467 453 ist eine Beschickvorrichtung für plattenförmiges Material bekannt. Diese Vorrichtung weist zwei sich scherenartig bewegende Arme auf, an denen über Flaschenzüge angetriebene Aggregate verschiebbar angebracht sind welche ihrerseits Magneten umfassen. Während die Arme sich über eine Mechanik angetrieben scherenartig gegenläufig auf und ab bewegen, verfahren die Magneten in einer solchen Weise, daß während der Magnet des einen Armes eine Metallplatte von einem Förderband aufnimmt, der Magnet des anderen Armes eine Metallplatte an einer vorbestimmten Position absetzt. Eine Vertikalführung mit Vertikalantrieb ist bei den Aggregaten nicht vorgesehen.

Die sich scherenförmig bewegenden Arme mit den daran angebrachten Magneten lassen sich für Wartungszwecke nicht aus Ihrer Arbeitsposition verschwenken. Eine Vorrichtung, wie sie in der EP 0 467 453 beschrieben ist, kann nur zusammen mit einem Förderband betrieben werden, da die Vorrichtung bauartbedingt nicht in der Lage ist einzelne Platten von einem Stapel aufzunehmen. Diese Vorrichtung ist durch die sich scherenförmig bewegenden Arme antreibende Mechanik nicht in der Lage, sich an unterschiedliche Höhen zum Aufnehmen einer Metallplatte, wie dies beispielsweise bei einem von der Maschine abzutragenden Stapel der Fall wäre, anzupassen. Durch die Verwendung von Magneten ist es mit dieser Beschickvorrichtung nicht möglich, nicht-magnetisierbares Plattenmaterial zu transportieren.

Der Erfindung liegt das technische Problem zugrunde, eine vergleichsweise einfach aufgebaute Beschick- oder Stapelvorrichtung für plattenförmige Werkstücke zu schaffen, die zudem bei einer Umstellung des automatischen Betriebs auf eine manuelle Beschickung oder Stapelung eine gute Zugänglichkeit des Arbeitsbereichs gewährleistet.

Dieses technische Problem wird erfindungsgemäß von einer Beschick- oder Stapelvorrichtung mit den Merkmalen des Patentanspruches 1 gelöst.

Die erfindungsgemäße Lösung zeichnet sich durch einen vergleichsweise einfachen und kompakten konstruktiven Aufbau aus. Dabei wurden, etwa im Vergleich zu der eingangs beschriebenen herkömmlichen Vorrichtung einige zusätzliche Handhabungsfunktionen weggelassen, die in vielen Anwendungsfällen im Zusammenhang mit der Beschickung von Bearbeitungsmaschinen mit plattenförmigen Werkstücken oder der Stapelung plattenförmiger Werkstücke nicht benötigt werden. Die erfindungsgemäße Vorrichtung läßt sich somit vergleichsweise kostengünstig realisieren und hat nur einen vergleichsweise geringen Platzbedarf.

Weiterhin ist bei der erfindungsgemäßen Lösung eine Schwenkeinrichtung derart vorgesehen, daß die gesamte Trageinrichtung mit den daran befindlichen Horizontal- und Vertikalführungen, den zugehörigen Antrieben und der eigentlichen Handhabungseinrichtung in bezug auf die Grundtrageinrichtung um eine horizontale Schwenkachse vorzugsweise nach oben weggeklappt werden kann. Bei manueller Beschickung oder Stapelung ist so für den Arbeiter eine ergonomisch einwandfreie Zugänglichkeit des Beschick- oder Stapelbereiches gewährleistet. Mit der Schwenkeinrichtung kann die Trageinrichtung mitsamt Anbauteilen ohne Zeitverzug aus ihrer Arbeitsposition in die hochgeklappte Ausweichposition gebracht werden, um die Funktion der Beschick- oder Stapelvorrichtung manuell zu übernehmen oder aber um schnell eine gute Zugänglichkeit, beispielsweise für kurzfristige Reparaturarbeiten zu erhalten. Umgekehrt kann ebenso schnell der automatische Betrieb wieder aufgenommen werden, indem die Trageinrichtung wieder unmittelbar in ihre Arbeitsposition abgeschwenkt wird.

Vorzugsweise umfaßt die Schwenkeinrichtung einen Pneumatik- oder Hydraulikzylinderantrieb. Es können jedoch auch andere geeignete Schwenkantriebe verwendet werden. Die Trageinrichtung ist zweckmäßigerweise als zumindest ein Tragarm oder als Tragrahmen ausgestaltet. Vorzugsweise ist der Tragrahmen als geschlossene Rahmenkonstruktion ausgebildet. Die Grundtrageinrichtung ist bevorzugt als sockel- oder tischförmiges Grundgestell bzw. als sockel- oder tischförmiger Grundrahmen ausgebildet. Die Grundtrageinrichtung kann je nach den konstruktiven Gegebenheiten aber beispielsweise auch als Tragsäule oder dergleichen gestaltet sein. Vorteilhafterweise nimmt die Grundtrageinrichtung neben der Schwenkeinrichtung auch die Steuerungseinrichtung, wie etwa die erforderliche Steuerungselektronik für die Beschick- oder Stapelvorrichtung auf. Vorzugsweise ist die Grundtrageinrichtung fest angeordnet, also nicht verfahrbar. Da die gute Zugänglichkeit des Arbeitsbereiches durch die Hochschwenkbarkeit der Trageinrichtung gewährleistet ist, spart man sich so den zusätzlichen Aufwand und Raumbedarf für Führungsschienen, Antrieb usw.

In einer günstigen Ausführungsform ist der Horizontalantrieb als kolbenstangenloser Pneumatikzylinder-Linearantrieb ausgebildet. Die Horizontalführungen und -antriebe sind vorzugsweise einachsig, bei Bedarf können sie jedoch auch zweiachsig sein. Der vom Aggregat getragene Vertikalantrieb für die Handhabungseinrichtung ist vorzugsweise als pneumatischer Hubzylinderantrieb und insbesondere als Kurzhubzylinderantrieb ausgebildet. Diese bevorzugten Antriebsvarianten für den Horizontal- und Vertikalantrieb ermöglichen eine kompakte und vergleichsweise gewichtsparende Konstruktion, was z.B. im Hinblick auf das Verschwenken dieser Komponenten günstig ist. Natürlich können aber auch entsprechende andere Antriebsvarianten gewählt werden. Das Aggregat, welches relativ zur Trageinrichtung in Horizontalrichtung verfahrbar ist, umfaßt vorzugsweise einen Fahrschlitten, und zwar insbesondere in Form eines Querträgers, d.h. einer Traverse, an der der Vertikalantrieb und die vertikal verfahrbare Handhabungseinrichtung angeordnet sind. Eine solche Schlittengestaltung trägt ebenfalls zu einer kompakten und leichten Gesamtkonstruktion bei.

Die Handhabungseinrichtung, die vom horizontal verfahrbaren Aggregat getragen wird und in bezug auf dieses vertikal verfahrbar ist, ist vorzugsweise als Saugeinrichtung ausgebildet. Je nach den konkreten Gegebenheiten kann sie aber ebenso als Greifmechanismus, Klemmechanismus oder dergleichen konstruiert sein. Als Saugeinrichtung ist die Handhabungseinrichtung vorteilhafterweise als einzelner Träger, Kreuz- oder Rahmenkonstruktion oder dergleichen ausgebildet, und die einzelnen Vakuum-Sauger sind daran angeordnet. Um gleichzeitig mehrere Werkstücke handhaben zu können, sind günstigerweise zumindest einzelne Saugergruppen unabhängig voneinander ansteuerbar. So können je Handhabungsvorgang beispielsweise zwei nebeneinander gestapelte Werkstücke gleichzeitig aufgegriffen und dann nacheinander auf ein Zuführband aufgelegt werden.

Eine weitere günstige Ausgestaltung der Erfindung besteht darin, daß die Trageinrichtung zusätzlich eine Ausrichteinheit umfaßt, um vor oder nach der Handhabung das jeweils zumindest eine zu handhabende Werkstück in der horizontalen Ebene auszurichten. Je nach den Erfordernissen ist die Ausrichteinheit zur Ausrichtung in nur einer horizontalen Achsenrichtung oder aber zur Ausrichtung in zwei horizontalen Achsenrichtung eingerichtet. Im Falle einer einachsigen Ausrichtung umfaßt die Ausrichteinheit vorzugsweise einen Festanschlag und einen diesem gegenüberliegenden beweglichen Schieber. Vorteilhafterweise ist die Ausrichteinheit derart außen seitlich an der Trageinrichtung angebracht, daß sie die Horizontalbewegung der Saugeinrichtung nicht beschränkt. Beispielsweise kann mit einer solchen Ausrichteinheit ein gerade aufzugreifendes Werkstück auf einem Werkstückstapel zunächst von der Ausrichteinheit ausgerichtet werden, bevor es dann beispielsweise mit Vakuumsaugern aufgegriffen wird.

In einer vorteilhaften Ausführungsform umfaßt die Beschick- oder Stapelvorrichtung eine unterhalb der Trageinrichtung vorgesehene Hubeinrichtung zur Zu- oder Abführung des jeweils zumindest einen zu handhabenden Werkstückes. Eine solche Hubeinrichtung ist besonders dann vorteilhaft, wenn die zur Beschickung vorgesehenen Werkstücke nicht einzeln, sondern in Form eines Stapels angeliefert werden, oder aber aus Werkstücken ein Stapel gebildet werden soll. Für die Zu- oder Abführung darauf gestapelt befindlicher Werkstücke ist die Hubeinrichtung zweckmäßigerweise nachtaktend ausgebildet. Eine derartige nachtaktende Konstruktion bedeutet, daß die Hubeinrichtung bei der Beschickung einer Bearbeitungsmaschine mit Werkstücken, die gestapelt auf der Hubeinrichtung vorliegen, die Hubhöhe jeweils um die Höhe einer Werkstückschicht des Stapels nachstellt, wenn eine Werkstückschicht von der Handhabungseinrichtung abgenommen worden ist. Im umgekehrten Fall, also wenn ein Stapel von Werkstücken auf der Hubeinrichtung aufgebaut wird, senkt sich die Hubeinrichtung bei der nachtaktenden Gestaltung nach dem Auflegen einer neuen Werkstückschicht um eine Schichtdicke ab. So wird also durch die nachtaktend arbeitende Hubeinrichtung die Oberkante des Werkstückstapels sowohl beim Stapelabbau als auch beim Stapelaufbau stets auf der gleichen Arbeitshöhe gehalten. Zweckmäßige Ausführungsformen bestehen darin, zum einen die Hubeinrichtung als Hubtisch zu gestalten und zum anderen auf der Auflagefläche der Hubeinrichtung eine Rollenbahn vorzusehen.

Eine bevorzugte Ausgestaltung der Erfindung besteht darin, die Hubeinrichtung für einen Grubenbetrieb auszulegen. Mit anderen Worten ist die Hubeinrichtung so konstruiert, daß sie bis auf ein Niveau unterhalb des Bodenniveaus, auf dem sich das Bearbeitungszentrum oder die Durchlaufbearbeitungsmaschine befindet, abgesenkt werden kann. Dafür kann entweder ein Grubenschacht vorgesehen sein, in den die Hubeinrichtung einen Werkstückstapel absenkt, oder, falls sich unter dem Bodenniveau ein weiterer Raum befindet, kann dort ein zusätzlicher Absenkbereich für die Hubeinrichtung gebildet werden. Auf diese Weise können auch vergleichsweise hohe Stapel plattenförmiger Werkstücke ab- oder aufgebaut werden. Dadurch, daß die gesamte Trageinrichtung inklusive der daran befindlichen Anbauteile nach oben weggeklappt werden kann, können auch hohe Werkstückstapel problemlos auf die Hubeinrichtung aufgelegt und dann in eine Grube abgesenkt oder aber aus der Grube herausgefahren und abtransportiert werden. Dabei kommt es zu keinen räumlichen Konflikten mit der Handhabungseinrichtung, deren Führungs- und Antriebsaggregaten usw., die bei herkömmlichen Vorrichtungen häufig die maximal zu verarbeitende Stapelhöhe auf vergleichsweise kleine Werkstückstapel begrenzen.

Erfindungsgemäß läßt sich also die Trageinrichtung mit der Handhabungseinrichtung und den zugehörigen Komponenten direkt über einer Hubeinrichtung, wie einem Hubtisch oder einer Hebebühne, anordnen, so daß die gesamte Beschick- oder Stapelvorrichtung zu den Seiten hin nur einen sehr geringen Raumbedarf hat. Durch die schnelle und einfache Wegschwenkbarkeit der Trageinrichtung mitsamt Anbaukomponenten um eine horizontale Achse wird erfindungsgemäß die raumsparende Anordnung der Vorrichtung mit einer einwandfreien Zugänglichkeit dieses Arbeitsbereiches verknüpft.

Nachfolgend werden nun zwei bevorzugte Ausführungsbeispiele der erfindungsgemäßen Beschick- oder Stapelvorrichtung für plattenförmige Werkstücke unter Bezugnahme auf die beigefügten Zeichnungen näher erläutert. Es zeigen:
- Fig. 1: ein erstes Ausführungsbeispiel der erfindungsgemäßen Beschick- oder Stapelvorrichtung in einer ersten, etwas vereinfachten Querschnittsansicht;
- Fig. 2: eine zur ersten Ansicht gemäß Fig. 1 parallele, und ebenfalls etwas vereinfachte zweite Querschnittsansicht des ersten Ausführungsbeispiels;
- Fig. 3: eine etwas vereinfachte Draufsicht auf das erste Ausführungsbeispiel (gegenüber den Fig. 1 und 2 um 90° gedreht);
- Fig. 4 bis Fig. 10: eine Folge von schematisch dargestellten Seitenansichten des ersten Ausführungsbeispiels in verschiedenen Betriebspositionen;
- Fig. 11: eine schematisch dargestellte Seitenansicht eines zweiten Ausführungsbeispiels der erfindungsgemäßen Beschick- oder Stapelvorrichtung.

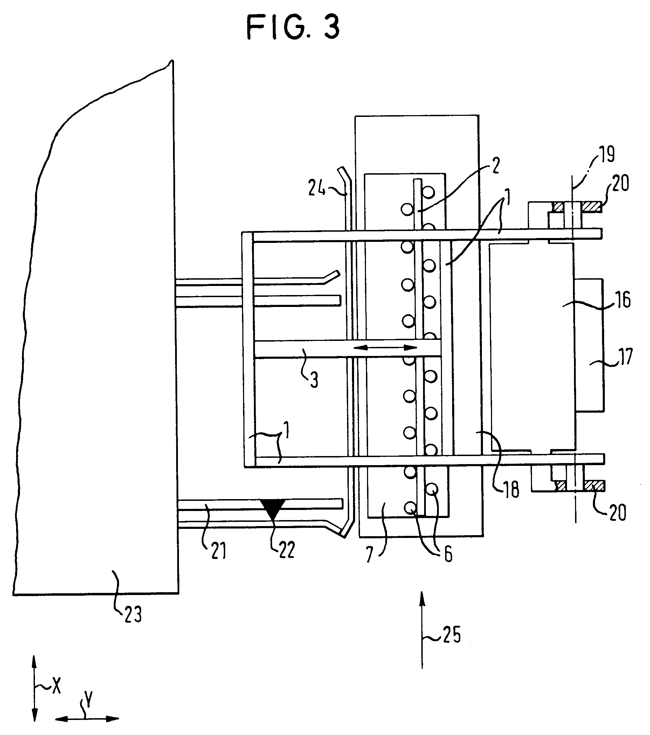

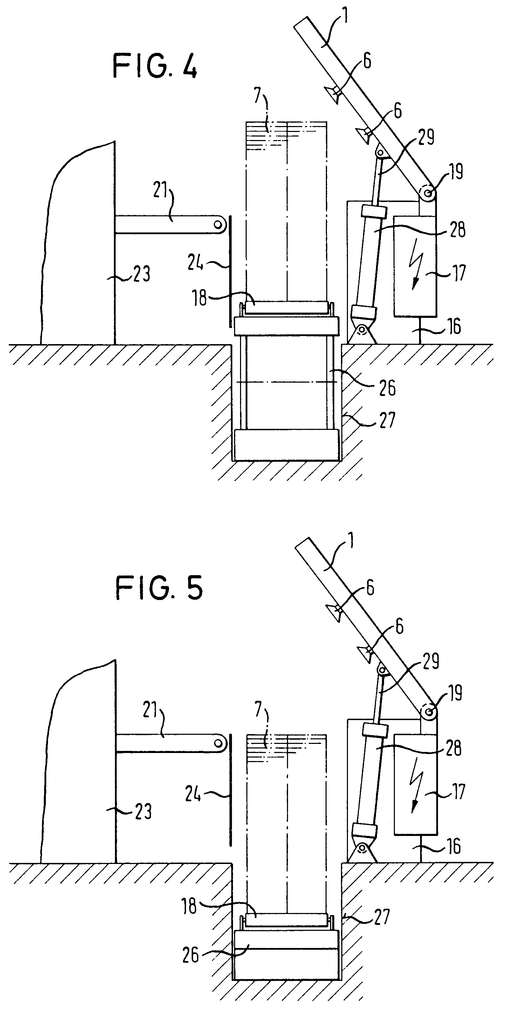

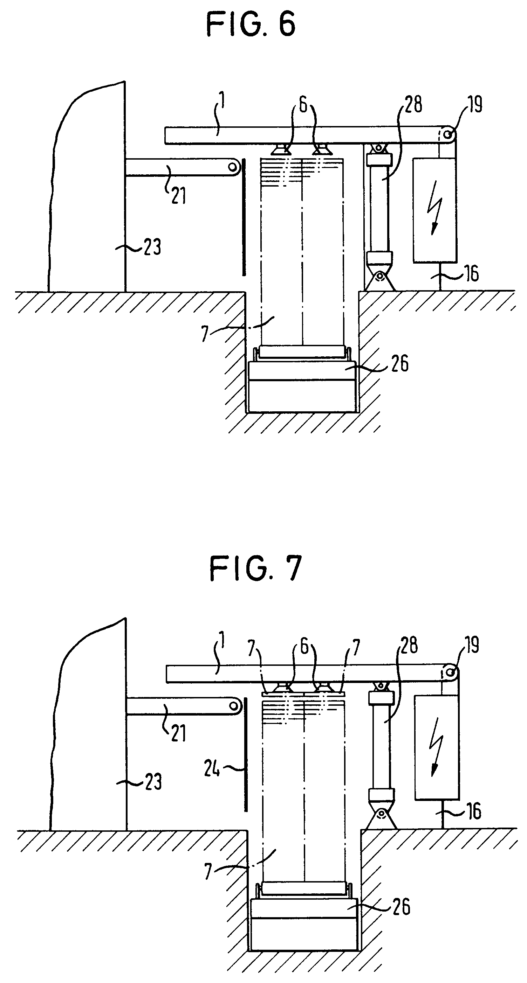

Zunächst wird der strukturelle Aufbau eines ersten Ausführungsbeispiels der erfindungsgemäßen Beschick- oder Stapelvorrichtung für plattenförmige Werkstücke erläutert. Wie am besten in Fig. 3 zu sehen ist, ist ein starrer geschlossener Rahmen 1 vorgesehen, der aus einzelnen Trägern aufgebaut ist. An seinem in Fig. 3 rechts befindlichen Ende ist der Rahmen 1 in einer (nur schematisch angedeuteten) Lagerung 20 um eine horizontale Schwenkachse 19 drehbar gelagert. Wie in Fig. 4 zu sehen ist, erfolgt die Lagerung des Rahmens 1 an einem festen sockelförmigen Grundgestell 16, und zwar derart, daß der Rahmen 1 in seiner horizontalen Betriebsposition, wie sie in Fig. 3 oder Fig. 6 gezeigt ist, oberhalb einer Zufuhreinrichtung 21 zu einer (nur schematisch angedeuteten) Bearbeitungsmaschine 23 angeordnet ist. Bei der Bearbeitungsmaschine 23 handelt es sich um eine Durchlaufbearbeitungsmaschine, ein Bearbeitungszentrum oder dergleichen für plattenförmige Werkstücke 7, beispielsweise aus Holz, Preßspan, Kunststoff, einem Werkstoffverbund oder dergleichen.

Das feste Grundgestell 16 umfaßt neben der tragenden Struktur zur Abstützung des Rahmens 1 und neben dessen Lagerung 20 insbesondere einen Schaltkasten 17 mit der zugehörigen Steuerungselektronik usw. und einen pneumatischen Hubzylinderantrieb 28, über dessen Kolbenstange 29 der Rahmen 1 um die horizontale Schwenkachse 19 verschwenkbar ist.

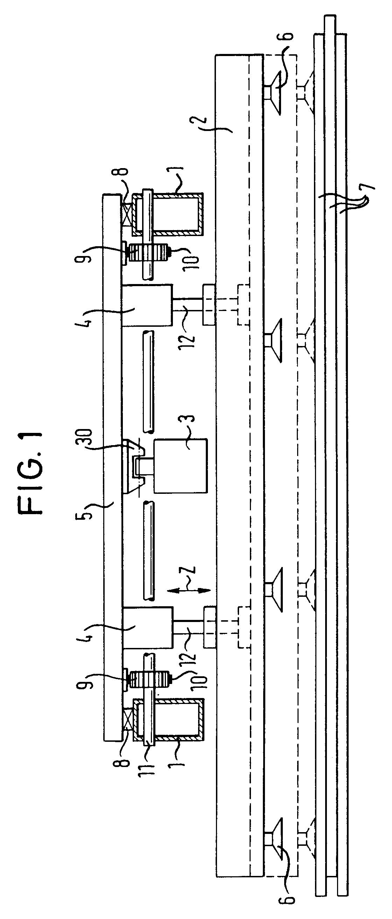

Wie in Fig. 1 gezeigt, sind die beiden Längsträger des Rahmens 1 jeweils mit Linearführungen 8 versehen. In diesen Führungen gleitet ein Schlitten 5, der als Traverse, d.h. als Querträger ausgebildet ist. In Längsrichtung des Rahmens 1, d.h. in Y-Richtung (vgl. Fig. 3), ist daran ein pneumatischer, kolbenstangenloser Linearzylinderantrieb 3 angebracht. Der Linearzylinderantrieb 3 fährt den Schlitten 5 über ein Verbindungselement 30 entlang den Führungen 8 hin- und her (siehe Doppelpfeil bei 3 in Fig. 3). Wie aus Fig. 1 ersichtlich, ist der Schlitten 5 mit zwei Zahnriemen 10 verbunden, die über Zahnscheiben 9 geführt sind. Die Zahnscheiben 9 sind in Querrichtung jeweils über eine Gleichlaufwelle 11 verbunden, die im Rahmen 1 gelagert ist. Die Zahnriemen 10, die Zahnscheiben 9 und die zugehörigen Gleichlaufwellen 11 dienen dem Gleichlauf der beiden Enden des Schlittens 5 in den Linearführungen 8, während der Antrieb des Schlittens 5 zentral über den Linearzylinderantrieb 3 erfolgt.

Der Schlitten 5 trägt zwei pneumatische Kurzhubzylinderantriebe 4, an deren Kolbenstangen 12 eine Saugtraverse 2 angebracht ist, die als Querträger ausgebildet ist und an der unten Vakuumsauger 6 in einer versetzten Anordnung befestigt sind. Die Vakuumsauger 6 sind mit (nicht dargestellten) Tastventilen versehen. In Fig. 1 sind zwei in der vertikalen Z-Richtung unterschiedliche Positionen der Saugtraverse 2 eingezeichnet. Mit durchgehenden Linien ist eine obere Ausgangsposition der Saugtraverse 2 dargestellt, in der die Kolbenstangen 12 der Kurzhubzylinderantriebe 4 eingezogen sind. Mit gestrichelten Linien ist eine zweite Position dargestellt, in der die Kolbenstangen 12 so weit nach unten ausgefahren sind, daß die Vakuumsauger 6 auf dem obersten plattenförmigen Werkstück eines Werkstückstapels 7 aufliegen und das obenliegende Werkstück 7 ansaugen können.

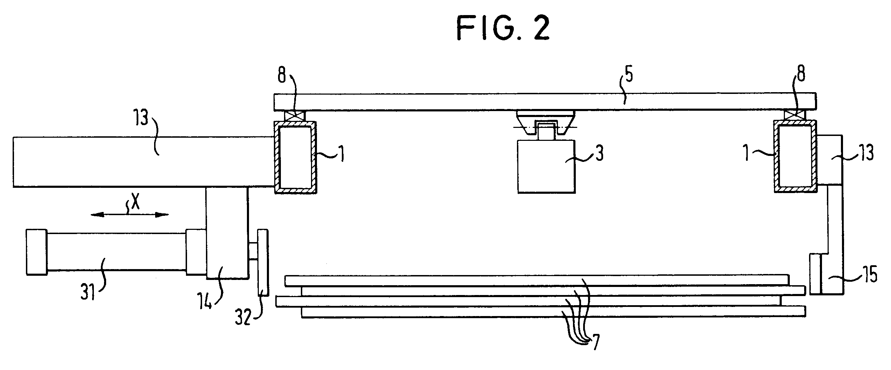

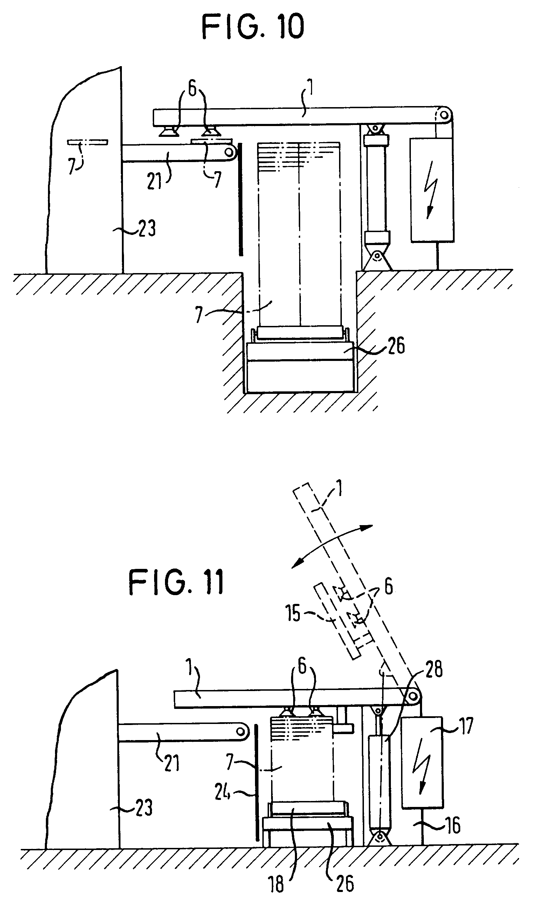

In Fig. 2 ist eine Ausrichteinheit zur Ausrichtung der plattenförmigen Werkstücke 7 in X-Richtung, d.h. in Richtung des Doppelpfeiles gezeigt. Die Ausrichteinheit ist mit Aufnahmeträgern 13 am Rahmen 1 angebracht. An den Aufnahmeträgern 13 ist auf der in Fig. 2 rechten Seite ein Festanschlag 15 angeordnet, der die sogenannte Nullkante für die Ausrichtung der plattenförmigen Werkstücke 7 bildet. Dem Festanschlag 15 gegenüberliegend, d.h. auf der in Fig. 2 linken Seite ist am dortigen Aufnahmeträger 13 eine in X-Richtung verschiebbare Aufnahmeeinheit 14 angeordnet, die einen Antriebszylinder 31 und einen zugehörigen Schieber 32 trägt. Durch Verschieben der Aufnahmeeinheit 14 entlang des zugehörigen Aufnahmeträgers 13 erfolgt eine Einstellung der Ausrichteinheit auf die jeweilige Werkstückgröße in X-Richtung, und durch Betätigen des Schiebers 32 erfolgt die Ausrichtung der plattenförmigen Werkstücke 7 am Festanschlag 15. Die Ausrichteinheit ist außen am Rahmen 1 angebracht, und zwar beispielsweise in einer Position, wie sie in Fig. 11 für das zweite Ausführungsbeispiel eingezeichnet ist (siehe Bezugszeichen 15).

Aus Gründen der besseren Übersichtlichkeit ist die Ausrichteinheit in den Fig. 1 und 3 weggelassen worden. Ebenfalls aus Gründen der besseren Übersichtlichkeit sind in Fig. 2 die weiteren, zum Schlitten 5 gehörigen Antriebskomponenten und Anbauteile weggelassen worden. In Fig. 3 sind der besseren Übersichtlichkeit wegen neben der Ausrichteinheit der Schlitten 5 und die zugehörigen Zahnriemen, Gleichlaufwellen usw. nicht eingezeichnet worden. Die in der horizontale Ebene liegenden Achsenrichtungen wurden in Fig. 3 zur Verdeutlichung mit X- und Y-Doppelpfeilen gekennzeichnet.

Wie aus den Fig. 3 und 4 zu ersehen ist, umfaßt das gezeigte erste Ausführungsbeispiel der erfindungsgemäßen Beschick- und Stapelvorrichtung neben dem schwenkbaren Rahmen 1 mit Anbauteilen und dem zugehörigen festen Grundgestell 16 mit Anbauteilen eine Hubbühne 26, die in einer Grube 27 angeordnet ist. Die Hubbühne 26 befindet sich in der in Fig. 3 dargestellten horizontalen Betriebsposition des Rahmens 1 unterhalb dieses Rahmens. Die Hubbühne 26 ist an ihrer Oberseite mit einer Rollenbahn 18 ausgestattet, auf der einzeln oder gestapelt vorliegende plattenförmige Werkstücke 7 getragen werden. Die Hubbühne 26 ist zwischen dem Grundgestell 16 und einer Zufuhreinrichtung 21, beispielsweise einem Förderband, einer Rollenbahn oder dergleichen angeordnet. Die Zufuhreinrichtung 21 führt die zu bearbeitenden plattenförmigen Werkstücke 7 unmittelbar der Bearbeitungsmaschine 23, also z.B. einer Durchlaufbearbeitungsmaschine zu. Zwischen der Hubbühne 26 und der Zufuhreinrichtung 21 ist ein sich vertikal erstreckendes Abstreifblech 24 angeordnet. Wie in Fig. 3 zu sehen, ist zudem an der Zufuhreinrichtung 21 ein Ausrichtlineal 22 mit der durch ein Dreieckssymbol gekennzeichneten Nullkante vorgesehen.

Eine weitere Zufuhreinrichtung zum Zuführen einzeln oder gestapelt vorliegender plattenförmiger Werkstücke 7 zur Hubbühne 26 ist lediglich durch einen Pfeil 25 angedeutet. Die Zufuhreinrichtung 25 ist beispielsweise als Rollenbahn oder Förderband ausgebildet. Wie Fig. 3 verdeutlicht, sind die Abmessungen des Rahmens 1, des Linearzylinderantriebs 3 und der zugehörigen Komponenten derart gewählt, daß die Saugtraverse 2 in Y-Richtung sowohl über die Hubbühne 26 mit den darauf befindlichen Werkstücken 7, als auch über die Zufuhreinrichtung 21 bewegbar ist. Die in Fig. 4 veranschaulichte Hubbühne 26 ist nachtaktend ausgebildet, d.h., die Oberkante des Werkstückstapels 7 wird taktweise unter Verwendung einer Lichtschrankensteuerung auf die vorbestimmte Arbeitshöhe nachgeführt.

Nun wird mit Bezug auf die Figuren 4 bis 10 der Betrieb des zuvor erläuterten ersten Ausführungsbeispieles der erfindungsgemäßen Beschick- oder Stapelvorrichtung erläutert. Zu den Figuren 4 bis 10 ist anzumerken, daß der besseren Übersichtlichkeit halber nur der Rahmen 1 und die Vakuumsauger 6 schematisch dargestellt werden und die weiteren, zuvor im Zusammenhang mit den Fig. 1 bis 3 erläuterten Komponenten, wie die Saugtraverse, deren Antriebe und Führungen und die Ausrichteinheit weggelassen wurden.

In Fig. 4 ist das Einfahren eines Stapels zu bearbeitender plattenförmiger Werkstücke 7 in die Beschick- oder Stapelvorrichtung veranschaulicht. Hierzu wird der Rahmen 1 mitsamt den daran befindlichen Anbauteilen um die horizontale Schwenkachse 19 hochgeklappt, indem der Hubzylinderantrieb 28 betätigt wird. Weiterhin wird die Hubbühne 26 in eine obere Position gefahren, in der die Rollenbahn 18 auf dem gleichen Niveau wie die Zufuhreinrichtung 25 (siehe Fig. 3), beispielsweise ebenfalls eine Rollenbahn, liegt. Nun kann ein Werkstückstapel 7, der wesentlich höher ist als das Niveau der Zufuhreinrichtung 21 zur Bearbeitungsmaschine 23, von der Zufuhreinrichtung 25 auf die Hubbühne 26 eingefahren werden. Das Einfahren eines solchen Werkstückstapels 7, dessen Höhe, wie in Fig. 4 gezeigt, das Arbeitsniveau der Zufuhreinrichtung 21 bei weitem übersteigt, wird erst dadurch möglich, daß der Rahmen 1 mit Anbauteilen hochgeklappt werden kann. Andernfalls wäre die einfahrbare Stapelhöhe auf ein Niveau beschränkt, das unterhalb der Position der Vakuumsauger 6 in der horizontalen Stellung des Rahmens 1 läge.

Nun wird der eingefahrene Werkstückstapel 7 durch Absenken der Hubbühne 26 in die Grube 27 abgesenkt, wie in Fig. 5 gezeigt. Danach wird der Rahmen mitsamt Anbauteilen durch Betätigen des Hubzylinderantriebs 28 in seine horizontale Betriebsposition abgeschwenkt, die in Fig. 6 dargestellt ist. In dieser Position befindet sich die Beschick- und Stapelvorrichtung in Bereitschaft. Nun werden die Vakuumsauger 6 durch Betätigung der Kurzhubzylinderantriebe 4 abgesenkt, bis sie die zwei oben auf dem Stapel nebeneinander liegenden Werkstücke 7 erreichen und ansaugen. Durch Hochfahren der Saugtraverse mittels der Kurzhubzylinderantriebe werden die beiden obenliegenden Werkstücke 7 vom Stapel abgehoben (vgl. Fig. 7). Vor dem Ansaugen und Abheben der obenliegenden Werkstücke 7 kann mit Hilfe der eingangs erläuterten Ausrichteinheit eine Ausrichtung der obenliegenden Werkstücke in X-Richtung erfolgen.

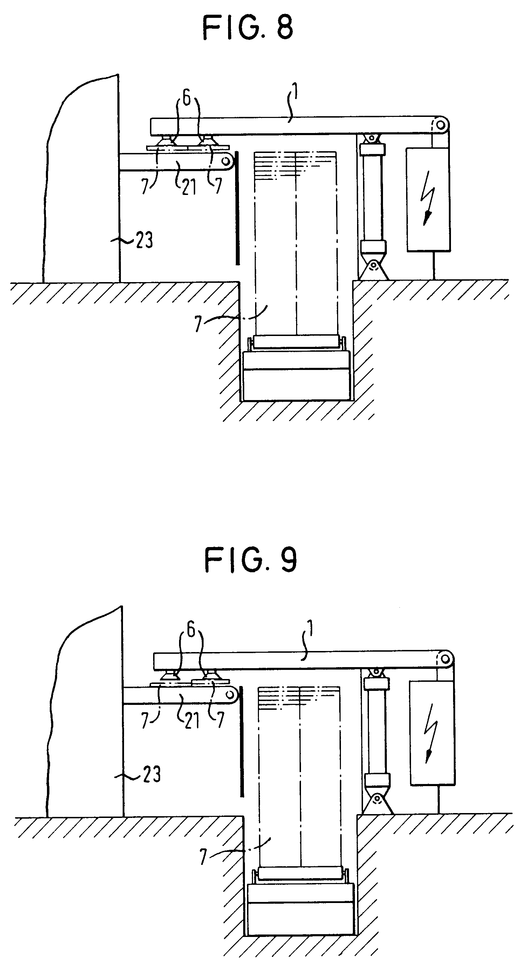

Nun fährt die Saugtraverse mit den daran befindlichen Vakuumsaugern 6 und den beiden von den Vakuumsaugern aufgenommenen Werkstücken 7 in Y-Richtung bis über die zur Bearbeitungsmaschine 23 zugehörige Zufuhreinrichtung 21. Diese Position ist in Fig. 8 dargestellt. Wie in Fig. 9 veranschaulicht, werden die beiden Werkstücke 7 nun nacheinander ohne erneute Betätigung der Kurzhubzylinderantriebe auf die Zufuhreinrichtung 21 fallengelassen, indem die Saugwirkung der Vakuumsauger 6 durch eine entsprechende Ansteuerung abgestellt wird. Das Fallenlassen des zweiten Werkstückes 7 ist aus Fig. 10 ersichtlich, und zwar erfolgt es zu einem Zeitpunkt, zu dem das erste Werkstück 7 bereits in die Bearbeitungsmaschine 23 eingelaufen ist. Die Zeitpunkte zum Fallenlassen des ersten und zweiten Werkstückes 7 erfolgen natürlich in Abstimmung auf die zu beschickende Bearbeitungsmaschine 23.

Anschließend fährt die Saugtraverse mit den Vakuumsaugern 6 wieder zurück in die Position entsprechend Fig. 6, und der Beschickvorgang beginnt von neuem. Hierfür hat die Hubbühne 26 zwischenzeitlich den Werkstückstapel 7 um die Höhe einer Werkstückschicht angehoben, so daß die beiden obenliegenden Werkstücke 7 sich wieder auf der vorbestimmten Arbeitshöhe befinden, in der sie durch Absenken der Saugtraverse mittels der Kurzhubzylinderantriebe aufgegriffen werden.

Dieses nachtaktende Nach-oben-Zustellen des Stapels 7 ermöglicht erst den Einsatz kompakter Kurzhubzylinderantriebe zur Bewegung der Saugtraverse in Z-Richtung, da sonst die Saugtraverse bei kleiner werdendem Werkstückstapel 7 entsprechend immer weiter nach unten abgesenkt werden müßte, um noch die obenliegenden Werkstücke 7 aufgreifen zu können. Die Kurzhubzylinderantriebe ermöglichen demgegenüber eine vergleichsweise leichte und kompakte Bauausführung der Beschick- oder Stapelvorrichtung, und insbesondere der hochklappbaren Rahmenkonfiguration. Außerdem wird die Steuerung vereinfacht, da die Absenkbewegung der Saugtraverse in Z-Richtung während des Abtragens eines Werkstückstapels immer um den gleichen Höhenbetrag erfolgen kann. Zudem kann die Taktfrequenz der Werkstückbeschickung durch die Verwendung der nachtaktenden Hubbühne erhöht werden, da die Saugtraverse keine großen Vertikalwege zurücklegen muß und das Nachführen der Stapelhöhe durch die Hubbühne gleichzeitig erfolgen kann, während die Saugtraverse gerade mit Werkstücken zur Beschickung unterwegs ist.

Sollten sich beim Abheben des obenliegenden oder der obenliegenden Werkstücke auf dem Stapel gleichzeitig zwei oder mehrere übereinanderliegende Stapelschichten lösen, werden diese überzähligen Werkstücke am Abstreifblech 24 abgestriffen, wenn die Saugtraverse dieses Abstreifblech in horizontaler Richtung passiert (vgl. die horizontale Verschiebebewegung, die zwischen den in den Fig. 7 und 8 dargestellten Positionen liegt).

Vorangehend wurde der Betriebsablauf bei der Beschickung einer Durchlaufbearbeitungmaschine, einem Bearbeitungszentrum oder dergleichen, mit plattenförmigen Werkstücken erläutert. Dabei wird natürlich die Beschick- oder Stapelvorrichtung steuerungstechnisch mit der Bearbeitungsmaschine verknüpft, damit die Beschickung und Bearbeitung der Werkstücke aufeinander abgestimmt ist und ein reibungsloser Ablauf gewährleistet ist. Im beschriebenen ersten Ausführungsbeispiel erfolgt die Anlieferung der einzelnen Werkstücke 7 bzw. der Werkstückstapel 7 über die Zufuhreinrichtung 25 quer zur Einlaufrichtung in die Bearbeitungsmaschine 23, und die Beschickung mittels der erfindungsgemäßen Beschick- oder Stapelvorrichtung erfolgt in Richtung der Einlaufrichtung in die Bearbeitungsmaschine. Selbstverständlich kann bei anderen Gegebenheiten die Beschick- und Stapelvorrichtung auch derart ausgebildet sein, daß die Beschickung mit Werkstücken anstatt in Einlaufrichtung in die Bearbeitungsmaschine, d.h. im vorliegenden Fall in Y-Richtung, quer zur Einlaufrichtung, d.h. im vorliegenden Fall in X-Richtung erfolgt. Mit anderen Worten kann die Beschick- oder Stapelvorrichtung beispielsweise so angeordnet werden, daß der Rahmen 1 nicht in Verlängerung der Zufuhreinrichtung 21 angeordnet ist, sondern quer zur Zufuhreinrichtung 21 liegt. Entsprechend liegt dann natürlich auch die Hubbühne 26 mit der zugehörigen Grube anders, und auch die Anlieferung der Werkstücke 7 auf die Hubbühne kann in bezug auf die Zufuhreinrichtung 21 von einer anderen Seite her erfolgen.

In völlig analoger Weise, jedoch in umgekehrter Ablaufrichtung kann die erfindungsgemäße Vorrichtung natürlich auch dazu dienen, beispielsweise bereits bearbeitete Werkstücke von einer Fördereinrichtung aufzunehmen, um dann einen Werkstückstapel auf einer Hubbühne zu bilden, wobei diese dann abwärts nachtaktend arbeitet, d.h. den sich bildenden Stapel taktweise jeweils um eine Schichthöhe absenkt, so daß die neue Werkstückschicht immer auf der gleichen Arbeitshöhe abgelegt werden kann.

In Fig. 11 ist ein zweites Ausführungsbeispiel der erfindungsgemäßen Beschick- oder Stapelvorrichtung gezeigt, das im strukturellen Aufbau und in der Funktionsweise dem ersten Ausführungsbeispiel entspricht, bei dem jedoch auf die Ausbildung einer Grube für die Hubbühne verzichtet worden ist. Die sich entsprechenden Komponenten sind mit den gleichen Bezugszeichen versehen wie beim ersten Ausführungsbeispiel, so daß auf die dortigen Erläuterungen und die dortige Funktionsbeschreibung verwiesen wird. Wenn die nachtaktende Hubbühne 26 sich auf dem normalen Bodenniveau befindet, anstatt in einem tieferen Grubenniveau, ist natürlich die zu verarbeitende maximale Stapelhöhe für die Werkstücke entsprechend begrenzt. Genauso wie beim ersten Ausführungsbeispiel bietet die Hochklappbarkeit des Rahmens 1 mitsamt Anbauteilen jedoch eine einwandfreie Zugänglichkeit des Arbeitsbereiches, z.B. für eine kurzfristige Umstellung auf manuellen Beschick- oder Stapelbetrieb. Auch für Reparaturen kann die Hochklappbarkeit der Rahmenkonfiguration sehr vorteilhaft sein. In Fig. 11 sind sowohl die hochgeklappte, als auch die horizontale Position des Rahmens 1 dargestellt, wobei die Klapprichtung durch einen Doppelpfeil veranschaulicht ist.

## Patentansprüche

1. Beschick- oder Stapelvorrichtung für plattenförmige Werkstücke, mit
- einer starren, sich im Betriebszustand im wesentlichen in horizontaler Richtung erstreckenden Trageinrichtung (1), die sich an einer Grundtrageinrichtung (16) abstützt,
- einer von der Trageinrichtung (1) getragenen Horizontalführung (8) mit einem zugehörigen Horizontalantrieb (3) entlang der Horizontalführung,
- einem von der Trageinrichtung (1) getragenen und mittels des Horizontalantriebs (3) in der Horizontalführung (8) verfahrbaren Aggregat (4, 5), das seinerseits eine Vertikalführung (4, 12) mit einem zugehörigen Vertikalantrieb (4, 12) entlang der Vertikalführung umfaßt, und
- einer vom Aggregat (4, 5) getragenen und mittels des Vertikalantriebs (4, 12) entlang der Vertikalführung (4, 12) verfahrbaren Handhabungseinrichtung (2, 6) für das jeweils zumindest eine zu handhabende Werkstück (7), wobei
- die Grundtrageinrichtung (16) mit einer Schwenkeinrichtung (20, 28, 29) zum Wegschwenken der Trageinrichtung (1) mitsamt dem Aggregat (4, 5) und der Handhabungseinrichtung (2, 6) um eine im wesentlichen horizontale Schwenkachse (19) versehen ist.

2. Beschick- oder Stapelvorrichtung nach Anspruch 1,
**dadurch gekennzeichnet, daß** die Schwenkeinrichtung einen Pneumatikzylinderantrieb (28, 29) oder einen Hydraulikzylinderantrieb umfaßt.

3. Beschick- oder Stapelvorrichtung nach Anspruch 1 oder 2,
**dadurch gekennzeichnet, daß** die Grundtrageinrichtung (16) als sockel- oder tischförmiges Grundgestell oder Grundrahmen ausgebildet ist.

4. Beschick- oder Stapelvorrichtung nach Anspruch 3,
**dadurch gekennzeichnet, daß** das Grundgestell (16) oder der Grundrahmen die Steuerungseinrichtungen (17) für die Beschick- oder Stapelvorrichtung aufnimmt.

5. Beschick- oder Stapelvorrichtung nach einem der Ansprüche 1 bis 4,
**dadurch gekennzeichnet, daß** die schwenkbare Trageinrichtung als zumindest ein Tragarm oder als Tragrahmen (1) ausgebildet ist.

6. Beschick- oder Stapelvorrichtung nach Anspruch 5,
**dadurch gekennzeichnet, daß** der Tragrahmen als geschlossene Rahmenkonstruktion (1) ausgebildet ist.

7. Beschick- oder Stapelvorrichtung nach einem der Ansprüche 1 bis 6,
**dadurch gekennzeichnet, daß** der Horizontalantrieb als kolbenstangenloser Pneumatikzylinder-Linearantrieb (3) ausgebildet ist.

8. Beschick- oder Stapelvorrichtung nach einem der Ansprüche 1 bis 7,
**dadurch gekennzeichnet, daß** das Aggregat einen Fahrschlitten (5) umfaßt.

9. Beschick- oder Stapelvorrichtung nach Anspruch 8,
**dadurch gekennzeichnet, daß** der Fahrschlitten auf einem Querträger (5) basiert.

10. Beschick- oder Stapelvorrichtung nach einem der Ansprüche 1 bis 9,
**dadurch gekennzeichnet,** daß der Vertikalantrieb des Aggregates als pneumatischer Hubzylinderantrieb (4, 12) ausgebildet ist.

11. Beschick- oder Stapelvorrichtung nach Anspruch 10,
**dadurch gekennzeichnet,** daß der pneumatische Hubzylinderantrieb mit Kurzhubzylindern (4) ausgestattet ist.

12. Beschick- oder Stapelvorrichtung nach einem der Ansprüche 1 bis 11,
**dadurch gekennzeichnet,** daß die Handhabungseinrichtung als Saugeinrichtung (2, 6), Greifmechanismus, Klemmechanismus oder dergleichen ausgebildet ist.

13. Beschick- oder Stapelvorrichtung nach Anspruch 12,
**dadurch gekennzeichnet, daß** die Saugeinrichtung als zumindest ein Träger (2) oder als Rahmen mit Vakuum-Saugern (6) ausgebildet ist.

14. Beschick- oder Stapelvorrichtung nach Anspruch 13,
**dadurch gekennzeichnet, daß** die Vakuum-Sauger (6) zur gleichzeitigen Handhabung mehrerer Werkstücke (7) zumindest gruppenweise unabhängig voneinander ansteuerbar sind.

15. Beschick- oder Stapelvorrichtung nach einem der Ansprüche 1 bis 14,
**dadurch gekennzeichnet, daß** die Trageinrichtung (1) eine Ausrichteinheit (13, 14, 15, 31, 32) zur Ausrichtung des jeweils zumindest einen zu handhabenden Werkstücks (7) in der horizontalen Ebene umfaßt.

16. Beschick- oder Stapelvorrichtung nach Anspruch 15,
**dadurch gekennzeichnet, daß** die Ausrichteinheit einen Festanschlag (15) und einen beweglichen Schieber (32) umfaßt.

17. Beschick- oder Stapelvorrichtung nach einem der Ansprüche 1 bis 16,
**dadurch gekennzeichnet, daß** unterhalb der Trageinrichtung (1) eine Hubeinrichtung (26) zur Zu- oder Abführung des jeweils zumindest einen zu handhabenden Werkstücks (7) vorgesehen ist.

18. Beschick- oder Stapelvorrichtung nach Anspruch 17,
**dadurch gekennzeichnet, daß** die Hubeinrichtung (26) für eine Zu- oder Abführung gestapelt darauf befindlicher Werkstücke (7) nachtaktend ausgebildet ist.

19. Beschick- oder Stapelvorrichtung nach Anspruch 17 oder 18,
**dadurch gekennzeichnet, daß** die Hubeinrichtung als Hubtisch (26) ausgestaltet ist.

20. Beschick- oder Stapelvorrichtung nach einem der Ansprüche 17 bis 19,
**dadurch gekennzeichnet, daß** die Hubeinrichtung (26) auf ihrer Auflagefläche mit einer Rollenbahn (18) versehen ist.

21. Beschick- oder Stapelvorrichtung nach einem der Ansprüche 17 bis 20,
**dadurch gekennzeichnet, daß** die Hubeinrichtung (26) für einen Grubenbetrieb (27) ausgebildet ist.

## Claims

1. Charging or stacking device for plate-like work pieces having
- a rigid support device (1) which extends in the operational state substantially in the horizontal direction and is supported on a base support device (16),
- a horizontal guide (8) supported by the support device (1) with an associated horizontal drive (3) along the horizontal guide,
- an assembly (4, 5) which is supported by the support device (1) and is capable of being moved in the horizontal guide (8) by means of the horizontal drive and which for its part comprises a vertical guide (4, 12) having an associated vertical drive (4, 12) along the vertical guide, and
- a handling device (2, 6) for the at least single work piece (7) to be handled in each case which is supported by the assembly (4, 5) and is capable of being moved along the vertical guide (4, 12) by means of the vertical drive (4, 12), wherein
- the base support device (16) is provided with a swivelling device (20, 28, 29) for swinging away the support device (1) together with the assembly (4, 5) and the handling device (2, 6) about a substantially horizontal swivel axis (19).

2. Charging or stacking device according to Claim 1, characterised in that the swivelling device comprises a pneumatic cylinder drive (28, 29) or a hydraulic cylinder drive.

3. Charging or stacking device according to Claim 1 or 2, characterised in that the base support device (16) is constructed as a pedestal-like or table-like base stand or base frame.

4. Charging or stacking device according to Claim 3, characterised in that the base stand (16) or base frame accommodates the control devices (17) for the charging or stacking device.

5. Charging or stacking device according to one of Claims 1 to 4, characterised in that the swivelling support device is constructed as at least one support arm or as a support frame (1).

6. Charging or stacking device according to Claim 5, characterised in that the support frame is constructed as a closed frame structure (1).

7. Charging or stacking device according to one of Claims 1 to 6, characterised in that the horizontal drive is constructed as a pneumatic cylinder linear drive (3) without piston rod.

8. Charging or stacking device according to one of Claims 1 to 7, characterised in that the assembly comprises a sliding carriage (5).

9. Charging or stacking device according to Claim 8, characterised in that the sliding carriage is based on a transverse support (5).

10. Charging or stacking device according to one of Claims 1 to 9, characterised in that the vertical drive of the assembly is constructed as a pneumatic lifting cylinder drive (4, 12).

11. Charging or stacking device according to Claim 10, characterised in that the pneumatic lifting cylinder drive is fitted with short stroke cylinders (4).

12. Charging or stacking device according to one of Claims 1 to 11, characterised in that the handling device is constructed as a suction device (2, 6), gripping mechanism, clamping mechanism or the like.

13. Charging or stacking device according to Claim 12, characterised in that the suction device is constructed as at least one support (2) or as a frame with vacuum suckers (6).

14. Charging or stacking device according to Claim 13, characterised in that the vacuum suckers (6) can be controlled at least in groups independent of one another for the simultaneous handling of several work pieces (7).

15. Charging or stacking device according to one of Claims 1 to 14, characterised in that the support device (1) comprises an aligning unit (13, 14, 15, 31, 32) for aligning the at least single work piece (7) to be handled in each case in the horizontal plane.

16. Charging or stacking device according to Claim 15, characterised in that the aligning unit comprises a fixed limit stop (15) and a movable slide (32).

17. Charging or stacking device according to one of Claims 1 to 16, characterised in that below the support device (1) a lifting device (26) is provided for feeding or removing the at least single work piece (7) to be handled in each case.

18. Charging or stacking device according to Claim 17, characterised in that the lifting device (26) is constructed to cycle in step for feeding or removing work pieces (7) located in a stack on it.

19. Charging or stacking device according to Claim 17 or 18, characterised in that the lifting device is designed as an elevating platform (26).

20. Charging or stacking device according to one of Claims 17 to 19, characterised in that the lifting device (26) is provided with a roller conveyor (18) on its support surface.

21. Charging or stacking device according to one of Claims 17 to 20, characterised in that the lifting device (26) is constructed for a mining operation (27).

## Revendications

1. Dispositif de garnissage ou d'empilement pour des pièces façonnées en forme de plaques, comportant
- un dispositif support (1) rigide, s'étendant, à l'état de fonctionnement, sensiblement dans la direction horizontale, prenant appui sur un dispositif support de base (16),
- un guidage horizontal (8), porté par le dispositif support (1), comportant un entraînement horizontal (3) afférent, le long du guidage horizontal,
- un groupe (4, 5), porté par le dispositif support (1) et déplaçable dans le guidage horizontal (8), au moyen de l'entraînement horizontal (3), groupe qui comprend de son côté un guidage vertical (4, 12) avec un entraînement vertical (4, 12) afférent, le long du guidage vertical et,
- un dispositif de manipulation (2, 6) porté par le groupe (4, 5) et déplaçable le long du guidage vertical (4, 12) au moyen de l'entraînement vertical (4, 12), pour la au moins chaque fois une pièce façonnée (7), où
- le dispositif support de base (16) est doté d'un dispositif de pivotement (20, 28, 29), destiné à produire un écartement par pivotement du dispositif support (1), conjointement avec le groupe (4, 5) et le dispositif de manipulation (2, 6), autour d'un axe de pivotement (19) sensiblement horizontal.

2. Dispositif de garnissage ou d'empilement selon la revendication 1, caractérisé en ce que le dispositif de pivotement comprend un entraînement à vérin pneumatique (28, 29) ou un entraînement à vérin hydraulique.

3. Dispositif de garnissage ou d'empilement selon la revendication 1 ou 2, caractérisé en ce que le dispositif support de base (16) est réalisé sous la forme d'un bâti de base ou d'un cadre de base, en forme de socle ou de table.

4. Dispositif de garnissage ou d'empilement selon la revendication 3, caractérisé en ce que le bâti de base (16) ou le cadre de base supporte les dispositifs de commande (17) destinés au dispositif de garnissage ou d'empilement.

5. Dispositif de garnissage ou d'empilement selon l'une des revendications 1 à 4, caractérisé en ce que le dispositif support pivotant est réalisé sous la forme d'au moins un bras support ou sous la forme de cadre support (1).

6. Dispositif de garnissage ou d'empilement selon la revendication 5, caractérisé en ce que le cadre support est réalisé sous la forme d'une construction en cadre (1) fermée.

7. Dispositif de garnissage ou d'empilement selon l'une des revendications 1 à 6, caractérisé en ce que l'entraînement horizontal est réalisé sous la forme d'un entraînement linéaire à vérin pneumatique, sans tige de piston.

8. Dispositif de garnissage ou d'empilement selon l'une des revendications 1 à 7, caractérisé en ce que le groupe comprend un chariot de déplacement (5).

9. Dispositif de garnissage ou d'empilement selon la revendication 8, caractérisé en ce que le chariot de déplacement est basé sur une poutre transversale (5).

10. Dispositif de garnissage ou d'empilement selon l'une des revendications 1 à 9, caractérisé en ce que l'entraînement vertical du groupe est réalisé sous la forme d'un entraînement à cylindre de levée (4, 12) pneumatique.

11. Dispositif de garnissage ou d'empilement selon la revendication 10, caractérisé en ce que l'entraînement à cylindre de levée pneumatique est équipé de cylindres à course courte (4).

12. Dispositif de garnissage ou d'empilement selon l'une des revendication 1 à 11, caractérisé en ce que le dispositif de manipulation est réalisé sous la forme d'un dispositif à aspiration (2, 6), d'un mécanisme de préhension, d'un mécanisme de serrage, ou analogue.

13. Dispositif de garnissage ou d'empilement selon la revendication 12, caractérisé en ce que le dispositif à aspiration est réalisé sous la forme d'au moins un support (2) ou sous la forme d'un cadre ayant des ventouses (6).

14. Dispositif de garnissage ou d'empilement selon la revendication 13, caractérisé en ce que les ventouses (6) sont susceptibles d'être commandées indépendamment les unes des autres, au moins par groupes, pour obtenir une manipulation simultané de plusieurs pièces façonnées (7).

15. Dispositif de garnissage ou d'empilement selon l'une des revendications 1 à 14, caractérisé en ce que le dispositif support (1) comprend une unité d'orientation (13, 14, 15, 31, 32) destinée à orienter chaque fois la au moins une pièce façonnée (7) à manipuler, dans le plan horizontal.

16. Dispositif de garnissage ou d'empilement selon la revendication 15, caractérisé en ce que l'unité d'orientation comprend une butée fixe (15) et un coulisseau mobile (32).

17. Dispositif de garnissage ou d'empilement selon l'une des revendications 1 à 16, caractérisé en ce qu'au dessous du dispositif support (1) est prévu un dispositif de levage (26) destiné à amener ou évacuer le chaque fois au moins une pièce façonnée (7) à manipuler.

18. Dispositif de garnissage ou d'empilement selon la revendication 17, caractérisé en ce que le dispositif de levage (26) est réalisé pour assurer l'alimentation et l'évacuation de pièces façonnées (7) se trouvant empilées au-dessus de lui, en suivant une cadence.

19. Dispositif de garnissage ou d'empilement selon la revendication 17 ou 18, caractérisé en ce que le dispositif de levage est réalisé sous la forme d'une table de levage (26).

20. Dispositif de garnissage ou d'empilement selon l'une des revendications 17 à 19, caractérisé en ce que le dispositif de levage (26) est doté d'une piste à rouleaux (18) sur sa surface de pose.

21. Dispositif de garnissage ou d'empilement selon l'une des revendications 17 à 20, caractérisé en ce que le dispositif de levage (26) est réalisé pour un fonctionnement sous terre (27).
